# EUROPEAN PATENT APPLICATION

(11) **EP 2 623 381 A1**
(43) Date of publication of application: **07.08.2013**
(21) Application number: 13153384.6
(22) Date of filing: 31.01.2013
(51) Int. Cl.: B60T 7/12, B60W 30/14

(54) **Descent control of vehicle speed**

(30) Priority: 31.01.2012 US 201213362540
(71) Applicant: DEERE & COMPANY, Moline, Illinois 61265-8098 (US)
(72) Inventor: Heine, Karl G, Dubuque, IA Iowa 52001 (US); Stander, Francois, Dubuque, IA Iowa 52002 (US); Carr, Jamie C, Dubuque, IA Iowa 52001 (US); Shuler, Jeremy B, Durango, IA Iowa 52039 (US)
(74) Representative: Münch, Christian

(57) **Abstract**

The present disclosure provides a method of automatically controlling ground speed of a vehicle 100 in which the vehicle 100 includes a control system having a controller 106, a throttle 126, a brake sensor 128, and a braking mechanism 108, 110, 124. The method includes enabling a descent control function in the controller 106, detecting a change in a vehicle operating condition, determining current vehicle ground speed, establishing a desired vehicle speed based on the current vehicle ground speed, and controlling the braking mechanism 108, 110, 124 to maintain vehicle ground speed at or below the desired vehicle speed.

## Description

The present invention relates to controlling vehicle speed, and more particularly to controlling descent vehicle speed through vehicle retardation methods.

Vehicle speed can be difficult to control while descending a hill or moving over rough terrain. Vehicle operators are often challenged to control vehicle speed through operator input to a throttle controller and brake pedal. To help vehicle operators maintain or control downhill vehicle speed, conventional control systems are adapted to receive instantaneous slope information from a grade or slope sensor. Based on the grade, the conventional control system may increase or decrease the vehicle speed to a default vehicle speed set point. Vehicle operators can also manually control a vehicle retarder or transmission gear selection to control vehicle speed. However, many of these conventional control systems are complicated or direct vehicle speed to a level uncomfortable to the vehicle operator.

There is a need for a vehicle descent control system which can establish a vehicle speed based only on current vehicle speed and which can be adjusted by the vehicle operator inside a cab of the vehicle.

### Summary

In an exemplary embodiment of the present disclosure, a method of automatically controlling ground speed of a vehicle is provided in which the vehicle includes a control system having a controller, a throttle, a brake sensor, and a braking mechanism. The method includes enabling a descent control function in the controller, detecting a change in a vehicle operating condition, determining current vehicle ground speed, establishing a desired vehicle speed based on the current vehicle ground speed, and controlling the braking mechanism to maintain vehicle ground speed at or below the desired vehicle speed. The enabling step can include actuating a user control switch.

In one aspect of this embodiment, the method can include detecting an engagement in the throttle or a change in brake sensor condition. The descent control function can be disabled when the throttle is engaged or the brake sensor condition changes. In addition, the method can include detecting a release of the engaged throttle or another change in brake sensor condition, determining current vehicle ground speed, establishing a second desired vehicle speed based on the current vehicle ground speed, and controlling the braking mechanism to maintain vehicle ground speed at or below the second desired vehicle speed. The first desired vehicle speed can be the same as or different from the second desired vehicle speed.

In another aspect, the method includes detecting the vehicle ground speed is greater than the desired vehicle speed and increasing the level of braking by the braking mechanism to reduce vehicle ground speed. The method can further include disabling the descent control function. This can happen when the method detects a vehicle fault condition, the method detects vehicle ground speed is greater than the sum of the desired vehicle speed and a vehicle speed threshold, or the method detects vehicle ground speed is less than the sum of the desired vehicle speed and a vehicle speed threshold.

In a different embodiment, a method is provided for controlling vehicle speed of a vehicle having a controller in electrical communication with a vehicle braking mechanism, a brake control sensor having a first state and a second state, and a throttle pedal. The method includes activating a descent control system, monitoring the state of the brake control sensor and throttle position, detecting a change in the state of the brake control sensor or throttle position, establishing a target vehicle speed based on a current vehicle speed, and controlling the braking mechanism to maintain vehicle speed at or below the target vehicle speed. In this method, the activating step can include comparing the current vehicle speed to the target speed such that if the current vehicle speed is greater than the target speed, the descent control system is activated and if the current vehicle speed is less than the target speed, the descent control system is not activated.

In one aspect of this embodiment, the detecting step can include detecting a change from a first state to a second state of the brake control sensor when a brake pedal is released, or detecting a change in throttle position when a throttle pedal is released. The method can also include detecting the vehicle speed is greater than the target vehicle speed and increasing the level of braking by the braking mechanism to reduce the vehicle speed to approximately at or below the target vehicle speed.

In another aspect, the method further includes deactivating the descent control system when one condition occurs selected from a group of conditions consisting of (a) detecting a vehicle fault condition; (b) detecting vehicle speed is greater than the sum of the target vehicle speed and a first threshold; and (c) detecting vehicle ground speed is less than the sum of the target vehicle speed and a second threshold.

In a related aspect, the method includes detecting an engagement in the throttle or a change in brake sensor condition. The descent control system can be deactivated when the throttle is engaged or the brake sensor changes from a second condition to a first condition. In this event, the method can include detecting a release of the engaged throttle or a change in the brake sensor from the first state to the second state, reactivating the descent control system, establishing a second target vehicle speed based on the current vehicle speed, and controlling the braking mechanism to maintain vehicle ground speed at or below the second target vehicle speed.

In another embodiment, a vehicle configured to achieve a desired vehicle speed is provided. The vehicle includes an engine, a transmission, at least one axle having a wheel, a throttle having a throttle position, a brake sensor having a plurality of conditions, a control system including a controller adapted to perform a descent control function, and a braking mechanism controllably coupled to the controller, the braking mechanism coupled to the engine, transmission, or the at least one axle. The controller is in electrical communication with the throttle and brake sensor such that the controller is adapted to detect a change in throttle position or a change in the condition of the brake sensor. When the controller detects a change in throttle position or brake sensor condition, the descent control function is in an active configuration and the controller controls the braking mechanism to maintain vehicle speed at or below a desired vehicle speed.

In one aspect, the control system includes a selectable user switch in electrical communication with the controller. In another aspect, the braking mechanism includes a transmission retarder, a service brake, an eddy current electric retarder, an engine brake retarder, or an exhaust brake retarder. In a further embodiment, the control system includes an engine controller operably coupled to the engine and a transmission controller operably coupled to the transmission. The controller is in electrical communication with the engine controller and transmission controller. In addition, the braking mechanism is controllably coupled to the engine controller or transmission controller.

### Brief Description of the Drawings

The above-mentioned aspects of the present invention and the manner of obtaining them will become more apparent and the invention itself will be better understood by reference to the following description of the embodiments of the invention, taken in conjunction with the accompanying drawings, wherein:
Figure 1 is a schematic of a vehicle layout;
Figure 2 is a flow diagram for a descent control system;
Figure 3 is another flow diagram of the descent control system of Figure 2; and
Figure 4 is an exemplary chart illustrating vehicle characteristics during vehicle operation.

Corresponding reference numerals are used to indicate corresponding parts throughout the several views.

### Detailed Description

The embodiments of the present invention described below are not intended to be exhaustive or to limit the invention to the precise forms disclosed in the following detailed description. Rather, the embodiments are chosen and described so that others skilled in the art may appreciate and understand the principles and practices of the present invention.

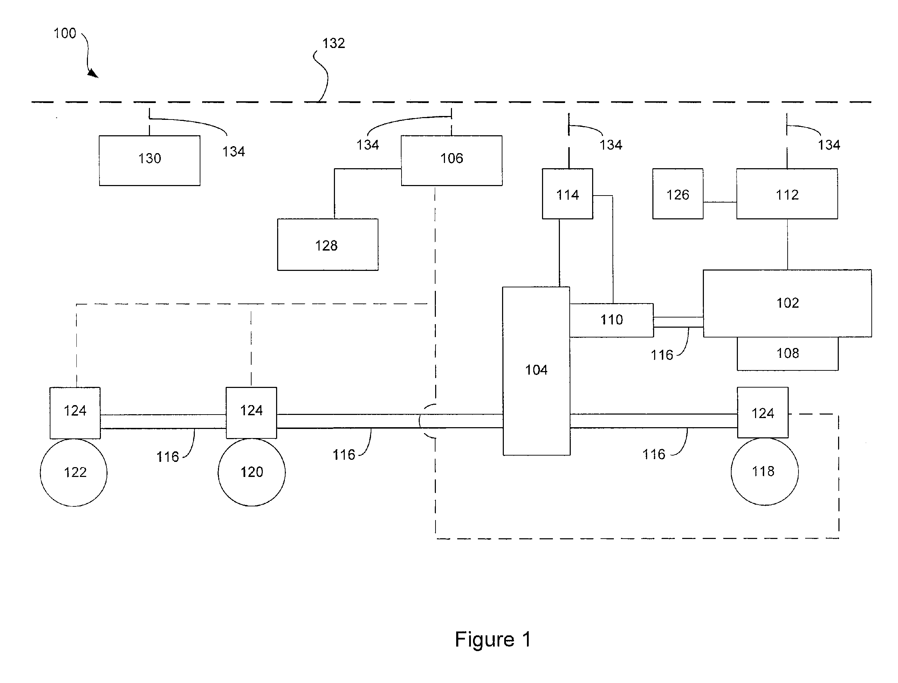

In Figure 1 of the present disclosure, an exemplary embodiment of a vehicle 100 is provided with a descent control system to assist with controlling vehicle speed while travelling downhill. The vehicle 100 can be any powered vehicle or machine, and the embodiment of Figure 1 illustrates one such example. The vehicle 100 may be an on-highway vehicle, an off-highway vehicle, a car, an articulated dump truck, an electrically-powered vehicle, or other known vehicle. However, the present disclosure is not intended to be limited to the vehicle 100 shown in Figure 1.

In Figure 1, the vehicle 100 is shown having an engine 102 and transmission 104. The engine 102 can be controlled by an engine controller or control unit 112. Similarly, the transmission 104 can be controlled by a transmission controller or control unit 114. The engine controller will be referred to as an ECU and the transmission controller will be referred to as a TCU in the present disclosure.

The vehicle can include a braking mechanism to retard or slow the vehicle speed during operation. The braking mechanism can be in the form of an engine brake retarder 108, a transmission retarder 110, an electric or electro-hydraulic service brake 124, an eddy current electric retarder (not shown), or an exhaust brake retarder (not shown). The engine brake retarder 108 can be any device that slows the engine output by dissipating energy. The retarder 108 can dissipate energy by controlling the valves in the engine. The ECU 112 can control the engine brake retarder 108. The transmission retarder 110 can dissipate energy in the vehicle driveline 116. To do so, the retarder 110 may operate one or more hydraulic pumps connected to the transmission 104 to dissipate energy. The transmission retarder 110 can be controlled by the TCU 114.

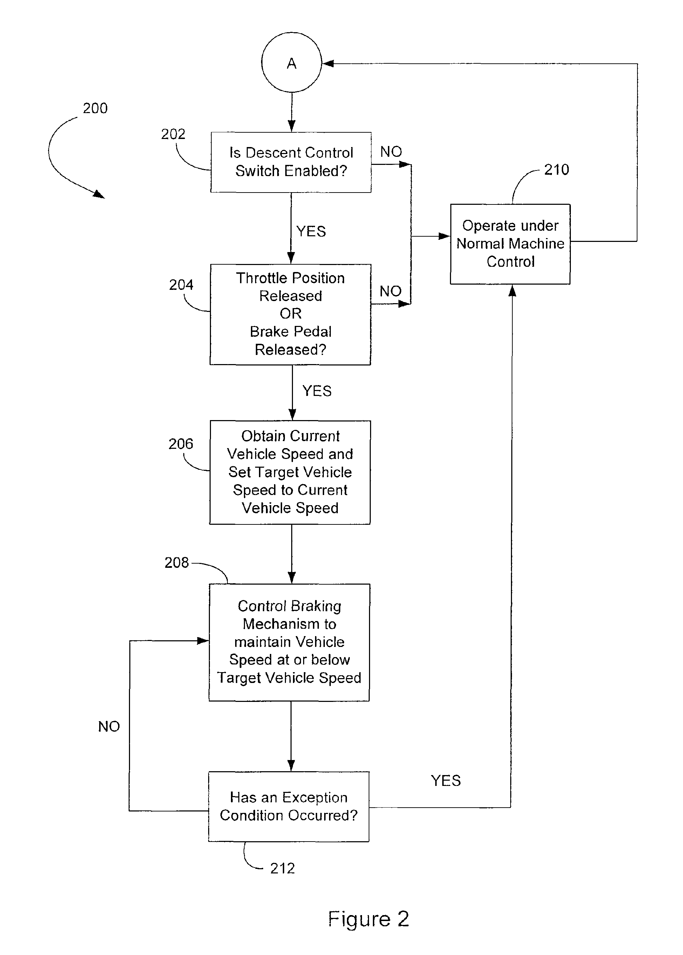

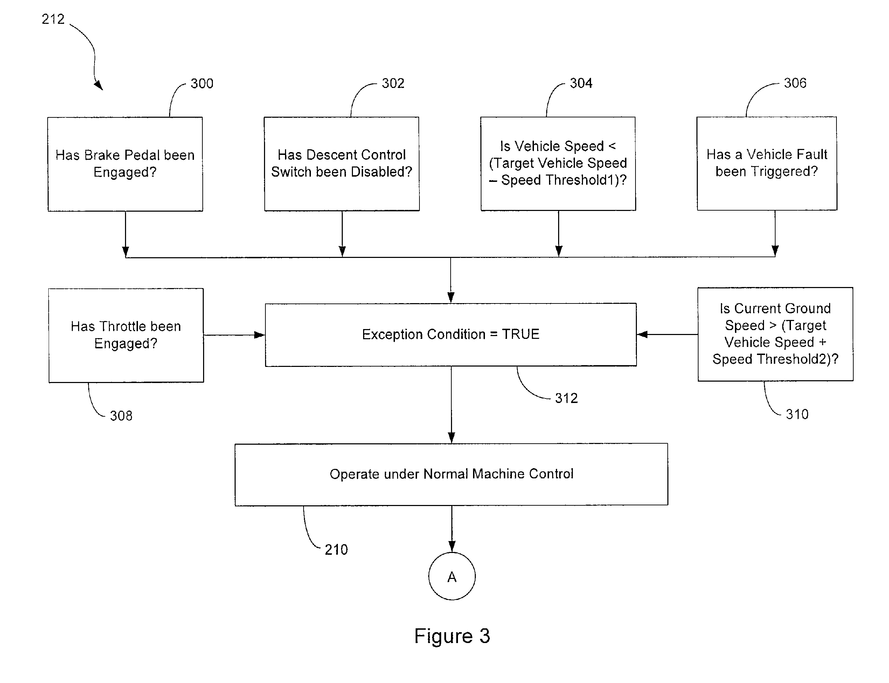

The vehicle 100 can also include a vehicle controller 106, or chassis control unit (CCU), for at least partially controlling the vehicle braking mechanism. The descent control system includes the controller 106. In this system, a downloadable software function, e.g., descent control function, can be loaded in the controller 106 to perform the necessary functions of a descent control system. An example of a descent control system will be further described with reference to Figures 2 and 3.

The vehicle 100 can also include at least one axle. In Figure 1, the vehicle 100 has a first axle 118, a second axle 120 and a third axle 122. A service brake 124 is shown mechanically coupled to each axis. There can be fewer axles or additional axles depending on the type of vehicle. In addition, not every axle may include a service brake coupled thereto. In another aspect, there may be one or more service brakes coupled to a single axle (e.g., if there are multiple wheels coupled to the same axle, each wheel may be controlled by a single service brake). The axles can be coupled to one another via one or more vehicle drivelines 116.

The vehicle 100 can include a cab in which a vehicle operator controls the vehicle. The cab (not shown) can include a steering wheel, lever, switches, pedals, and other controls for operating the vehicle 100. The cab can include a throttle pedal 126 for increasing the amount of power produced by the engine 102. The ECU 112 can be in electrical communication with the throttle 126 as shown in Figure 1. The cab can also include a brake pedal (not shown). The throttle pedal and brake pedal are operator-controlled inputs to the descent control system. The brake pedal (not shown) can be in communication with the controller 106. A brake sensor 128 is electrically coupled to the controller 106 such that when the brake pedal is engaged, the brake sensor 128 reads a first state. When the brake pedal is released, the brake sensor 128 changes from the first state to a second state. In this example, the brake sensor 128 changes between the first and second states depending on whether the operator has applied or released the brake pedal. In other embodiments, however, the brake sensor 128 may have other states.

Another switch or operator-controlled input is a descent control activation switch 130. This switch 130 can be disposed in the cab so the operator can control whether the descent control system is enabled or disabled. In other embodiments, the switch 130 is optional and may not be provided. Here, the descent control system may always be enabled so long as the conditions for active control are satisfied.

The vehicle 100 may include additional sensors such as a grade sensor, inclinometer, or accelerometer (not shown). Other sensors may include a load sensor and traction control sensor. While these sensors may be important for various vehicle control and performance, in at least one embodiment, the descent control system does not require information from these sensors.

The vehicle control system can include a vehicle CAN or datalink 132. This is a main datalink to which the vehicle controllers are in electrical communication with. In Figure 1, the vehicle controller 106 is in electrical communication with the vehicle CAN 132 via a CAN connection 134. Similarly, the descent control switch 130, ECU 112, and TCU 114 are in electrical communication with the vehicle CAN via CAN connections 134. To illustrate the communication between different controllers, throttle position from the throttle 126 is information stored in the ECU 112. The ECU 112 can communicate throttle position to the vehicle controller 106 and/or TCU 114 by sending a signal over the CAN connection 134 to the vehicle datalink 132. Once the signal is received by the vehicle datalink 132, the vehicle controller 106 and TCU 114 can receive the signal and process the information contained in the signal. This shared communication link is useful for descent control as will be described in Figures 2 and 3.

Referring to Figure 2, an exemplary embodiment of a descent control system 200 is shown. In this embodiment, the descent control system 200 can be activated or enabled by a vehicle operator. To do so, the operator can actuate a switch 130 in the cab of the vehicle to an active or "ON" position. In another embodiment, the switch 130 may not be present and either the descent control system 200 is always enabled or another triggering condition may be required to enable it. The cab (not shown) may include a dashboard or display in which the controller 106 sends a message to the dashboard or display which then displays the message to the vehicle operator. For example, if descent control is active or inactive, a message, symbol, or icon may appear on the display informing the operator of this condition.

In Figure 2, the descent control system 200 follows a descent control function or program stored in the vehicle controller 106 for controlling vehicle speed when a vehicle is traveling downhill. In the system, the controller 106 can determine whether the descent control switch 130 is enabled or not. In block 202, the controller 106 can receive a signal from the switch 130 (if there is one), and from the signal, determine whether the operator has activated the switch 130 to enable descent control. If the operator has not enabled the switch 130, and thus has not activated the descent control system 200, the vehicle will continue to operate under normal vehicle control as shown in block 210. If, however, the switch 130 is enabled, the controller 106 can monitor both the throttle position and brake pedal position.

In block 204, the controller 106 receives a signal from the ECU 112 related to throttle position. If the operator is pressing the throttle pedal, or accelerator pedal, then the descent control system 200 will determine the operator does not want to enable descent control (e.g., the vehicle may be traveling uphill rather than downhill). Once the throttle pedal is released, however, the ECU 112 communicates this change in throttle position to the controller 106 and the controller 106 performs the function of block 206.

In the same manner, the controller 106 receives a signal from the brake sensor 128. The signal may be in the form of a first state and a second state, where in the first state the operator has engaged the brake pedal and in the second state the brake pedal is released. In some instances, the brake pedal has to be engaged by a threshold pressure and not just tapped for the brake sensor 128 to change states. The controller 106 monitors the brake sensor 128 and is able to detect a change in states. In the event the brake sensor is in a state in which the brake pedal is engaged, the descent control system 200 can be disabled or deactivated so the vehicle operates under normal control in block 210. When the vehicle is operating under normal conditions, the controller 106 will continuously monitor the conditions set forth in blocks 202 and 204 to determine whether descent control can be activated.

If, in block 204, the controller 106 detects the throttle or brake being released, the control system 200 moves to block 206 to trigger descent control. Here, the controller 106 can receive current vehicle speed and establish a target vehicle speed to correspond to the current vehicle speed. The descent control system 200 establishes the target vehicle speed as a speed in which the operator is comfortable with and the vehicle may be travelling downhill at a rate in which gravity is assisting with maintaining or increasing vehicle speed. To maintain vehicle speed at or below the target vehicle speed, the descent control system 200 retards or slows the vehicle speed in block 208.

In block 208, the controller 106 continues to monitor vehicle speed. If vehicle speed exceeds the target vehicle speed, the controller 106 communicates with the braking mechanism to slow the vehicle. If the vehicle speed is increasing rapidly, the controller 106 increases the level of braking by the braking mechanism to slow the vehicle. The braking mechanism can be an engine brake retarder, transmission retarder, exhaust brakes, service brakes, or an eddy current electric retarder. By slowing the vehicle, the controller 106 can maintain vehicle speed at or below the target vehicle speed. Since the operator can enable or disable descent control, the target vehicle speed can also be referred to as a desired vehicle speed.

The descent control system 200 can remain active and vehicle speed maintained at or below the target vehicle speed unless an exception condition arises. In block 212, the controller 206 may detect that an exception has been triggered such that descent control is deactivated and vehicle control returns to normal in block 210. A non-exclusive list of exception conditions is provided in Figure 3.

Referring to Figure 3, the controller 106 may determine an exception condition has occurred if any one of the conditions set forth in blocks 300, 302, 304, 306, 308, or 310 is true. These conditions are not meant to be exclusive as other exception conditions may also be used to disable descent control. In block 300, the brake sensor 128 may detect the brake pedal being engaged. When descent control is active and the vehicle speed is being maintained relative to the target vehicle speed, engagement of the brake pedal can trigger an exception condition which returns the vehicle to normal operating condition in block 210.

In block 302, descent control can be disabled if the descent control switch 130 in the cab is triggered off. Here, if the operator does not want the descent control system to be active, the operator may select such a condition. As such, the vehicle will operate according to normal operating control in block 210.

Another exception condition is provided in block 304 where the vehicle speed is less than the target speed and speed threshold. For instance, if the target vehicle speed is 30 kilometers per hour (kph) and the vehicle is traveling downhill the descent control system 200 will maintain the vehicle speed at or below the 30 kph. However, if the grade upon which the vehicle descends begins to flatten out, the gravity pulling the vehicle down the slope becomes less of a factor and vehicle speed slows down. The descent control system can include a speed threshold such that if the vehicle speed falls below the target speed and threshold, the descent control is disabled in block 304. In this case, the vehicle returns to normal operating control in block 210.

In block 306, the descent control system 200 will be disabled if the controller 106 detects a fault. Examples of possible faults include a fault in the throttle control, the target vehicle speed is invalid, a fault in the control system wiring, the brake sensor faults, or any other known fault that may impact the vehicle control system. Once a fault is detected, the controller 106 can disable the descent control system 200 and return the vehicle to normal operating control functionality in block 210.

Another exception condition is in block 308 when the throttle position changes. Here, the vehicle operator may engage the throttle pedal in the cab to accelerate the vehicle. The ECU 112 can transmit a signal to the controller 106 indicating the throttle position and the controller 106 can detect the increase in throttle percentage. Under these circumstances, the descent control system 200 will be disabled and the vehicle control will return to normal operating conditions in block 210.

Referring to block 310, an exception condition can occur when the vehicle ground speed exceeds a target vehicle speed by a threshold amount. This threshold amount, Threshold2, can be the same or different than the threshold, Threshold1, in block 304 albeit under different operating conditions. In the event the condition set forth in block 310 is true, its possible the braking mechanism has faulted and thus the controller 106 is unable to maintain vehicle speed at or below the target vehicle speed. In a non-limiting example, suppose the threshold value of Threshold2 is 10 kph and the target speed is 30 kph. If the vehicle ground speed exceeds 40 kph in this example, the exception condition in block 310 is triggered as being true in block 312 and the controller 106 will disable the descent control system. In this instance, the vehicle will return to normal operating control in block 210.

As described above, the controller 106 will monitor vehicle ground speed in relation to the target vehicle speed and also whether an exception condition occurs in block 212. If one of the conditions in blocks 300, 302, 304, 306, 308, or 310 occur, the controller 106 will determine an exception condition is true in block 312 and descent control will be deactivated. As shown in Figures 2 and 3, however, even if the vehicle control returns to normal operating control in block 210, the controller 106 continuously monitors vehicle performance and conditions to determine whether to reactivate descent control. The circle "A" in Figures 2 and 3 illustrates this continuous monitoring functionality of the controller 106 and further illustrates the closed-loop functionality of the descent control system.

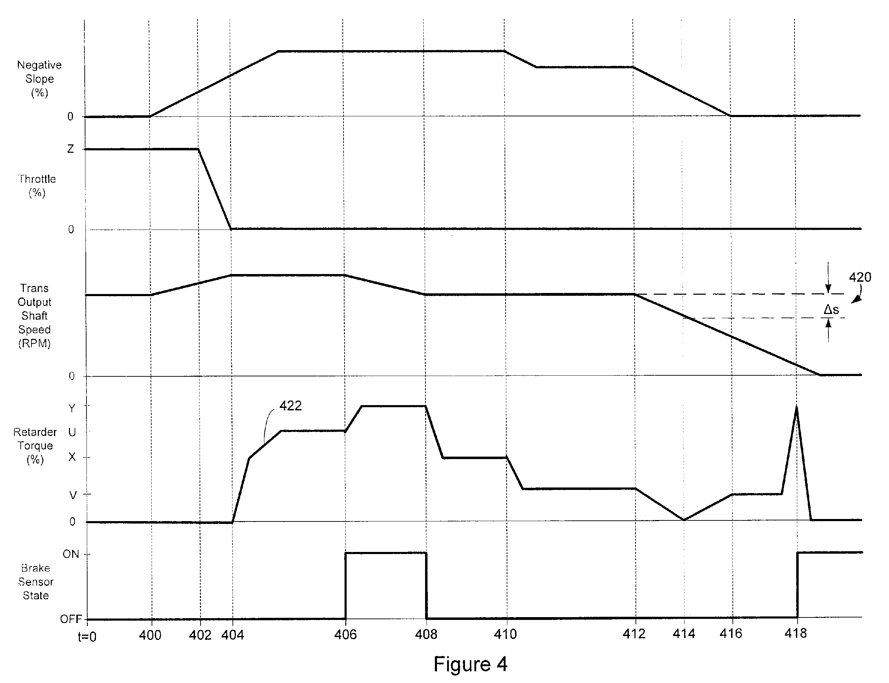

Referring to Figure 4, an exemplary chart illustrates a vehicle operating with a descent control system. In this example, a transmission retarder 110 is used to control vehicle speed as the braking mechanism. As shown in Figure 4, the left side of the chart illustrates different characteristics including descending slope in terms of grade percentage, throttle percentage, transmission output shaft speed in terms of revolutions per minute (RPM), retarder torque percentage, and brake sensor state in terms of an "On" state and an "Off" state. On the bottom axis of the chart, Figure 4 provides different operating stages that take place over time. As shown, there are ten different stages illustrated including stages 400, 402, 404, 406, 408, 410, 412, 414, 416, and 418.

Initially, the vehicle is operating at a throttle position of Z% and on a level ground (0% slope). Here, there is no retarder torque and the transmission output shaft speed is commensurate with the vehicle ground speed. At stage 400, however, the vehicle begins to descend along a slope. The operator maintains the throttle at Z%. In between stages 400 and 402, the transmission output shaft speed begins to increase as the vehicle travels downhill. At stage 402, the vehicle ground speed reaches a speed at which the operator wants to maintain. The operator releases the throttle. Per block 204 of the descent control system 200, once the throttle is released the vehicle controller 106 obtains current vehicle speed and establishes a target vehicle speed based on the current vehicle speed in block 206. Although in Figure 4 transmission output shaft speed is shown, vehicle speed can be calculated as a function of transmission output shaft speed by methods known to those skilled in the art.

As shown in stage 404, the throttle has been released as the vehicle continues traveling down the slope. In block 208, the controller 106 controls the transmission retarder 110 to maintain vehicle speed at or below the target vehicle speed. As shown in Figure 4, the controller 106 controls the retarder 110 by increasing the retarder torque percentage to a level of X%. At X% of retarder torque, the controller 106 is able to maintain transmission output shaft speed.

In between stages 404 and 406 of Figure 4, the negative slope continues to increase before it remains substantially constant through stages 406-410. As the slope continues to increase, the retarder torque increases from X% to U% to maintain the vehicle speed at the target vehicle speed (see reference number 422). In stage 406, however, the vehicle operator applies the brake pedal triggering a switch in states of the brake sensor. In the descent control system, the exception in block 300 of Figure 3 is true thereby disabling the system and returning the vehicle control to normal operating conditions. In addition, as shown in Figure 4, the brake sensor changes from an Off state to an On state. As this happens, the retarder torque increases to a level of Y% which is greater than X%. As the retarder torque increases, the transmission output shaft speed is reduced and therefore the vehicle ground speed decreases as well. Once the vehicle ground speed reaches a speed desired by the vehicle operator, the operator releases the brake pedal at stage 408. In doing so, the brake sensor changes from the On state to the Off state thereby causing the retarder torque to decrease from Y% to X%. Referring to Figure 2, when the brake pedal is released (e.g., in block 204), the controller 106 performs the functions in blocks 206 and 208. As shown in Figure 4, descent control is enabled as the transmission output shaft speed is maintained substantially constant. As such, the vehicle ground speed is maintained at or below a target vehicle speed. In addition, the transmission output shaft speed between stages 404 and 406 when descent control was first activated is greater than the transmission output shaft speed between stages 408 and 410. In this example, the target vehicle speed is different between the pair of stages so that the vehicle operator can select a desirable speed at which the vehicle descends the slope.

At stage 410, the slope begins to flatten out and there is less of a gravitational pull working to move the vehicle down the slope. Here, the controller 106 can maintain vehicle speed at or below the target vehicle speed with less retarder torque, and therefore the retarder torque percentage drops. Although a small decrease in transmission output shaft speed is shown, the speed recovers quickly and remains mostly constant as the controller 106 controls the retarder torque to maintain vehicle speed at or below the target vehicle speed.

At stage 412, the slope flattens further causing transmission output shaft speed to decrease. As the transmission output shaft speed decreases, the controller 106 decreases retarder torque since less braking is required to maintain vehicle speed at or below the target vehicle speed.

The transmission output shaft speed continues to decrease as the slope flattens until an exception condition arises in stage 414. This exception condition is similar to that in block 304. Rather than vehicle speed, here the transmission output shaft speed decreases below the target output shaft speed (which corresponds to the target vehicle speed) by a threshold amount, Δs. As a non-limiting example, if the target transmission output shaft speed is 1000 RPM and the threshold, Δs, is 100 RPM, if the transmission output shaft speed falls below 900 RMP the exception condition in stage 414 occurs. At this stage, the controller 106 determines an exception condition is true, as in block 312, and descent control is disabled so that the vehicle operates under normal operating control in block 210. As this happens, the retarder torque further decreases to approximately 0%.

In stage 416, the controller 106 has deactivated or disabled descent control and the vehicle now operates under the normal operating control. Under normal control, particularly when the brake pedal is not engaged, the retarder torque increases returns to a preset torque level established by the vehicle operator. As shown in Figure 4, the preset torque level is at V%. In addition, the slope has flattened out and the vehicle is traveling on flat ground

In stage 418, the vehicle operator applies the brake pedal to bring the vehicle to a stop. In doing so, the retarder torque increases sharply to Y% before decreasing rapidly to 0%. The transmission output shaft speed decreases to 0 RPM as the brake pedal is applied. As shown, the transmission output shaft speed reaches 0 RPM shortly after the retarder torque reaches 0%. As known to those skilled in the art, the retarder loses its retardation since it depends on relative motion and therefore decreases to 0% as the vehicle slows to a stop.

The example of Figure 4 provides a simple illustration of some, but not all, of the possible scenarios that may occur when a vehicle is equipped with a descent control system. A similar vehicle having an exhaust brake or engine brake retarder may perform similarly under these conditions. As also shown in Figure 4, the controller 106 can set the target vehicle speed to whatever speed is desired by the vehicle operator. In other words, there is no default vehicle speed at which the vehicle must operate at for a given slope. This is advantageous as different drivers have different comfort levels when operating a vehicle down a slope. The present disclosure allows vehicle operators to apply the throttle or brake pedal to control this vehicle set point and allow the descent control system to automatically control vehicle speed with reference to this desired vehicle speed.

While exemplary embodiments incorporating the principles of the present invention have been disclosed hereinabove, the present invention is not limited to the disclosed embodiments. Instead, this application is intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method of controlling vehicle speed of a vehicle (100) having a controller (106, 112, 114) in electrical communication with a vehicle braking mechanism (108, 110, 124), a brake control sensor (128) having a first state and a second state, and throttle (126), comprising:
activating a descent control system;
monitoring the state of the brake control sensor (128) and throttle position;
detecting a change in the state of the brake control sensor (128) or throttle position;
establishing a target vehicle speed based on a current vehicle speed; and
controlling the braking mechanism (108, 110, 124)) to maintain vehicle speed at or below the target vehicle speed.

2. The method of claim 1, wherein the activating step comprises comparing the current vehicle speed to the target speed;
wherein, if the current vehicle speed is greater than the target speed, the descent control system is activated;
further wherein, if the current vehicle speed is less than the target speed, the descent control system is not activated.

3. The method of claim 1, wherein the detecting step comprises:
(a) detecting a change from a first state to a second state of the brake control sensor (128) when a brake pedal is released, or
(b) detecting a change in throttle position when a throttle pedal (126) is released.

4. The method of claim 1, further comprising:
detecting the vehicle speed is greater than the target vehicle speed; and
increasing the level of braking by the braking mechanism (108, 110, 124) to reduce the vehicle speed to approximately at or below the target vehicle speed.

5. The method of claim 1, further comprising deactivating the descent control system when one condition occurs selected from a group of conditions consisting of:
(a) detecting a vehicle fault condition;
(b) detecting vehicle speed is greater than the sum of the target vehicle speed and a first threshold; and
(c) detecting vehicle ground speed is less than the sum of the target vehicle speed and a second threshold.

6. The method of claim 1, further comprising detecting an engagement in the throttle (126) or a change in brake sensor condition.

7. The method of claim 1, further comprising deactivating the descent control system when the throttle (126) is engaged or the brake sensor (128) changes from a second condition to a first condition.

8. The method of claim 7, further comprising:
detecting a release of the engaged throttle (126) or a change in the brake sensor (128) from the first state to the second state;
reactivating the descent control system;
establishing a second target vehicle speed based on the current vehicle speed; and
controlling the braking mechanism to maintain vehicle ground speed at or below the second target vehicle speed.

9. A vehicle configured to achieve a desired vehicle speed, comprising:
an engine (102);
a transmission (104);
at least one axle (118, 120, 122);
a throttle (126) having a throttle position;
a brake sensor (128) having a plurality of conditions;
a control system including a controller (106) adapted to perform a descent control function; and
a braking mechanism (108, 110, 124) controllably coupled to the controller (106) system, the braking mechanism (108, 110, 124) coupled to the engine (102), transmission (104), or the at least one axle (118, 120, 122);
wherein, the controller (106) is in electrical communication with the throttle (126) and brake sensor (128), the controller (!06) adapted to detect a change in throttle (126) position or a change in the condition of the brake sensor (128);
further wherein, when the controller (106) detects a change in throttle position or brake sensor condition, the descent control function is in an active configuration and the controller (106) controls the braking mechanism (108, 110, 124) to maintain vehicle speed at or below a desired vehicle speed.

10. The vehicle of claim 9, wherein the control system comprises a selectable user switch (120) in electrical communication with the controller (106).

11. The vehicle of claim 9, wherein the braking mechanism comprises a transmission retarder (110), a service brake (124), an eddy current electric retarder, an engine brake retarder (108), or an exhaust brake retarder.

12. The vehicle of claim 9, wherein the control system comprises:
an engine controller (112) operably coupled to the engine (102); and
a transmission controller (114) operably coupled to the transmission (104);
wherein, the controller (106) is in electrical communication with the engine controller (112) and transmission controller (114);
further wherein, the braking mechanism (108, 110, 124) is controllably coupled to the engine controller (112) or transmission controller (114).
